# EUROPEAN PATENT SPECIFICATION

(11) **EP 2 487 097 B1**
(45) Date of publication and mention of the grant of the patent: **27.01.2016**
(21) Application number: 11154103.3
(22) Date of filing: 11.02.2011
(51) Int. Cl.: B62M 3/08

(54) **Bicycle clipless pedal assembly**
Hakenlose Fahrradpedalanordnung
Ensemble de pédale de bicyclette sans attache

(43) Date of publication of application: 15.08.2012
(73) Proprietor: Wellgo Pedal's Corp., Taichung City 437 (TW)
(72) Inventor: Chen, Chung-I, 437, Taichung City (TW)
(74) Representative: Chaillot, Geneviève

(56) References cited:
- FR-A1- 2 809 701
- US-A- 5 787 764
- US-A1- 2004 129 110
- US-A1- 2005 021 194

## Description

### 1. Field of the Invention

The present invention relates to a bicycle clipless pedal that provides a plastic elastomer for elastically pressing a locking sheet relative to the pedal to provide a light weight and lower manufactured cost.

### 2. Description of Related Art

A conventional bicycle pedal includes a pedal and a locking sheet assembly pivotally mounted on the pedal. The locking sheet assembly has a metallic spring mounted thereon for providing an elastic pressing force relative to the locking sheet assembly. The pedal has an axle hole defined therein. A bearing set and a spindle are received in the axle hole. The spindle is provided for mounting on the bicycle. The pedal has a controller rotatably mounted thereon adjacent to the locking sheet assembly. The controller has a shape having various diameters for corresponding to the locking sheet assembly. When the controller is rotated to change the diameter of the controller, a movement of the locking sheet assembly is restricted for adjusting a clipping force.

However, a weight of the metallic spring of the conventional bicycle pedal has a heavy and the cost of the metallic spring is also expensive. In the modern market requirement, a light weight bicycle is necessary. Especially, the clipless pedals are usually utilized on the racing bike, the light-weight requirement is more important than other bikes.

US 2004/129110 A discloses a bicycle clipless pedal assembly as defined in the preamble of claim 1.

The bicycle clipless pedal as mentioned in the description is an example of the bicycle clipless assembly as mentioned in the claims.

The main objective of the present invention is to provide an improved bicycle clipless pedal assembly having a light weight and lower cost.

To achieve the objective, the bicycle clipless pedal assembly in accordance with the present invention includes a pedal, a locking sheet pivotally mounted on the pedal, and a plastic elastomer located between the pedal and the locking sheet. The pedal is pivotable relative to the locking sheet. The pedal has a first clipless end extending therefrom. The locking sheet has a second clipless end extending therefrom opposite to the first clipless end. A clipping space is defined between the first clipless end and the second clipless end for adapting to receive a cleat of a cycling shoe. The elastomer is a part of a pivot between the pedal and the locking sheet. The elastomer has one end abutting against the pedal and the other end abutting against the locking sheet for proving a resilience force to elastically press the locking sheet toward to the pedal, such that the locking sheet is elastically pivoted relative to the pedal for adapting to clip the cleat of the cycling shoe. The locking sheet has two ear rings extending therefrom and facing to each other. The pedal has a tenon ring extending therefrom for positioning between the two ear rings of the locking sheet. The elastomer has a through hole laterally defined therein and passing therethrough. A pivot rod passes through the two ear rings of the locking sheet, the tenon ring of the pedal, and the through hole in the elastomer to form the pivot between the pedal and the locking sheet. The tenon ring has a groove defined therein for partially receiving the elastomer. The locking sheet has an abutting blocker extending therefrom and located between the two ear rings for abutting against the elastomer. The pedal has a restricting rib extending therefrom and located in the clipping space for abutting against the locking sheet to prevent the locking sheet folding over the pedal. The pedal has a spindle pivotally passing therethrough for adapting to connect with a bicycle crank. The elastomer substantially has a trapezoid shape to form a narrow end and a broad end opposite to the narrow end. The through hole is located in the narrow end of the elastomer.

Comparing the conventional bicycle pedal, the elastomer of the present invention is provided for elastically pivoting the locking sheet relative to the pedal. The elastomer of the present invention is made of elastic material such that the elastomer of the present invention is lighter than the spring of the conventional bicycle pedal. The manufactured cost of elastomer of the present invention is also lower than the spring of the conventional bicycle pedal.

Further benefits and advantages of the present invention will become apparent after a careful reading of the detailed description with appropriate reference to the accompanying drawings.
In the drawings:
Fig. 1 is an exploded perspective view of a bicycle clipless pedal assembly in accordance with the present invention;
Fig. 2 is an exploded perspective view of the bicycle clipless pedal assembly in accordance with the present invention in another direction;
Fig. 3 is an assembled perspective view of the bicycle clipless pedal assembly in accordance with the present invention which is assembled with a bicycle crank; and
Figs. 4-5 are operational perspective views of the bicycle clipless pedal assembly in accordance with the present invention.

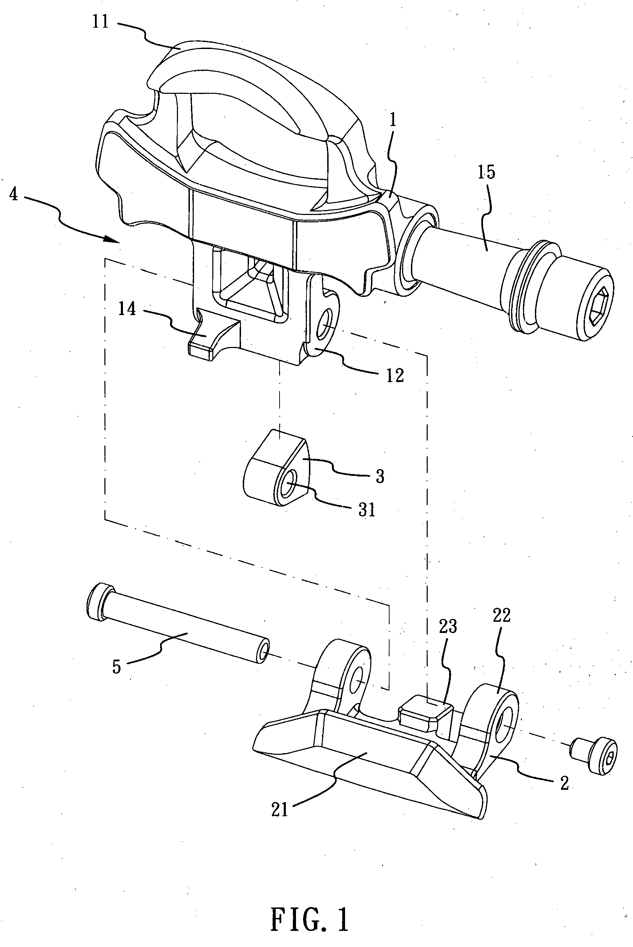

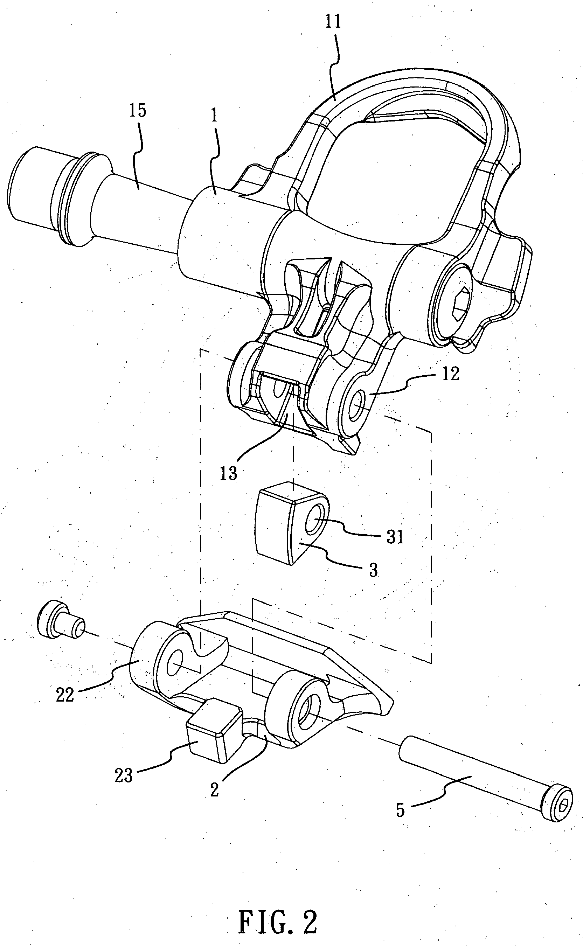

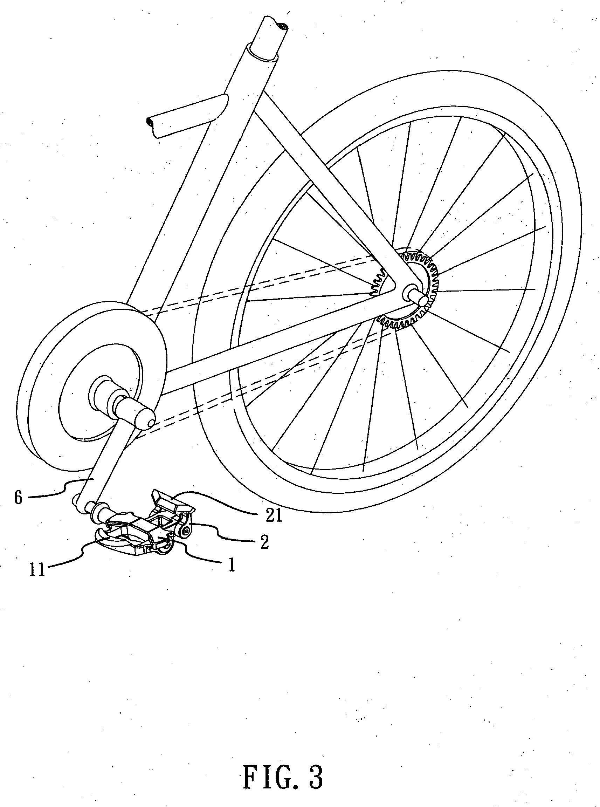

Referring to the drawings and initially to Figs. 1-3, a bicycle clipless pedal assembly in accordance with the present invention comprises a pedal 1, a locking sheet 2 pivotally mounted on the pedal 1, and a plastic elastomer 3 located between the pedal 1 and the locking sheet 2. The elastomer 3 has an elasticity coefficient depended on the plastic material.

The pedal 1 is pivotable relative to the locking sheet 2. The pedal 1 has a first clipless end 11 extending therefrom.

The locking sheet 2 has a second clipless end 21 extending therefrom opposite to the first clipless end 11. A clipping space 4 is defined between the first clipless end 11 and the second clipless end 21 for adapting to receive a cleat (not shown) of a cycling shoe (the cleat is a conventional structure and is not further described the detail in the following).

The elastomer 3 is a part of a pivot between the pedal 1 and the locking sheet 2. The elastomer 3 has one end abutting against the pedal 1 and the other end abutting against the locking sheet 2 for proving a resilience force to elastically press the locking sheet 2 toward to the pedal 1, such that the locking sheet 2 is elastically pivoted relative to the pedal 1 for adapting to clip the cleat of the cycling shoe.

Furthermore, the locking sheet 2 has two ear rings 22 extending therefrom and facing to each other. The pedal 1 has a tenon ring 12 extending therefrom for positioning between the two ear rings 22 of the locking sheet 2. The elastomer 3 has a through hole 31 laterally defined therein and passing therethrough. A pivot rod 5 passes through the two ear rings 22 of the locking sheet 2, the tenon ring 12 of the pedal 1, and the through hole 31 in the elastomer 3 to form the pivot between the pedal 1 and the locking sheet 2. The tenon ring 12 has a groove 13 defined therein for partially receiving the elastomer 3. The locking sheet 2 has an abutting blocker 23 extending therefrom and located between the two ear rings 22 for abutting against the elastomer 3. The pedal 1 has a restricting rib 14 extending therefrom and located in the clipping space 4 for abutting against the locking sheet 2 to prevent the locking sheet 2 folding over the pedal 1. The pedal 1 has a spindle 15 pivotally passing therethrough for adapting to connect with a bicycle crank 6. The groove 13 has an inner periphery correspondingly fitting with the elastomer 3. When the elastomer 3 is compressed and deformed, the inner periphery of the groove 13 is correspondingly abutted against the elastomer 3.

Furthermore, the elastomer 3 substantially has a trapezoid shape to form a narrow end and a broad end opposite to the narrow end. The through hole 31 is located in the narrow end of the elastomer 3. The broad end of the elastomer 3 is abutted against the abutting blocker 23 for increasing a rotating stroke of the blocking sheet 2 relative to the pedal 1.

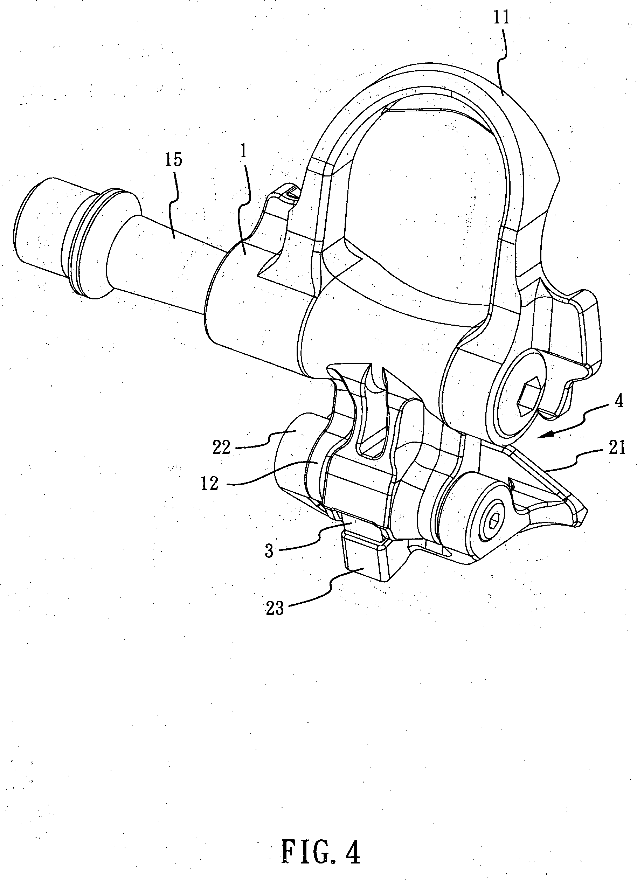

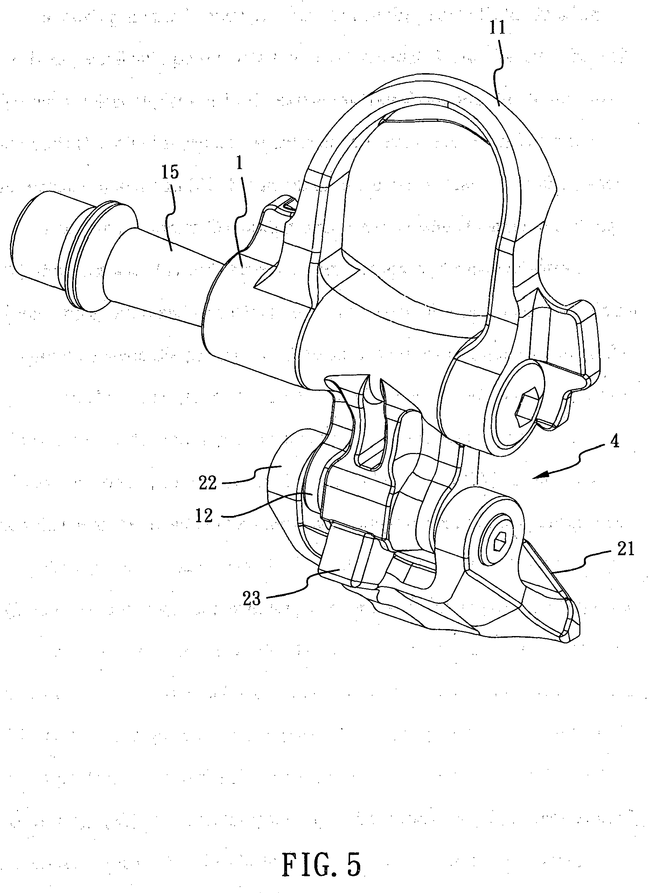

Referring to Figs. 4-5, in the initial stage, as shown in Fig. 4, the elastomer 3 is not deformed and is abutted against the inner periphery of the groove 13 in the pedal 1 and the abutting blocker 23 of the locking sheet 2, such that the second clipless end 21 is pivotally clamped toward the first clipless end 11. When the cleat of the cycling shoe is pressed into the clipping space 4 between the first clipless end 11 and the second clipless end 21, as shown in Fig. 5, the locking sheet 2 is pivoted relative to the pedal 1 as the pivot of the pivot rod 5. The inner periphery of the groove 13 is abutted against the elastomer 3 and the elastomer 3 is deformed, such that the second clipless end 21 is pivotally moved away from the first clipless end 11 for receiving the cleat of the cycling shoe.

## Claims

1. A bicycle clipless pedal assembly, comprising a pedal (1), the pedal (1) having a first clipless end (11) extending therefrom;
a locking sheet (2) pivotally mounted on the pedal (1), the locking sheet (2) being elastically pivotable relative to the pedal (1), the locking sheet (2) having a second clipless end (21) extending therefrom opposite to the first clipless end (11), a clipping space (4) defined between the first clipless end (11) and the second clipless end (21) for receiving a cleat of a cycling shoe;
a plastic elastomer (3) located between the pedal (1) and the locking sheet (2), the elastomer (3) being a part of a pivot between the pedal (1) and the locking sheet (2), the elastomer (3) having one end abutting against the pedal (1) and the other end abutting against the locking sheet (2) for providing a resilience force to elastically press the locking sheet (2) toward to the pedal (1), such that the locking sheet (2) is elastically pivoted relative to the pedal (1) for clipping the cleat of the cycling shoe, **characterized in that** the locking sheet (2) has two ear rings (22) extending therefrom and facing to each other, the pedal (1) having a tenon ring (12) extending therefrom for positioning between the two ear rings (22) of the locking sheet (2), the elastomer (3) substantially has a trapezoid shape to form a narrow end and a broad end opposite to the narrow end, the elastomer (3) having a through hole (31) laterally defined therein and passing therethrough, the through hole (31) being located in the narrow end of the elastomer (3), a pivot rod (5) passing through the two ear rings (22) of the locking sheet (2), the tenon ring (12) of the pedal (1), and the through hole (31) in the elastomer (3) to form the pivot between the pedal (1) and the locking sheet (2), the tenon ring (12) having a groove (13) defined therein for partially receiving the elastomer (3), the locking sheet (2) having an abutting blocker (23) extending therefrom and located between the two ear rings (22) for abutting against the elastomer (3).

2. The bicycle clipless pedal assembly as claimed in claim 1, wherein the pedal (1) has a restricting rib (14) extending therefrom and located in the clipping space (4) for abutting against the locking sheet (2) to prevent the locking sheet (2) folding over the pedal (1).

3. The bicycle clipless pedal assembly as claimed in claim 1, wherein the pedal (1) has a spindle (15) pivotally passing therethrough for adapting to connect with a bicycle crank (6).

## Patentansprüche

1. Fahrradklickpedalanordnung, umfassend ein Pedal (1), wobei das Pedal (1) ein von dort aus verlaufendes erstes Klickende (11) aufweist;
eine Einrastplatte (2), die schwenkbar an dem Pedal (1) montiert ist, wobei die Einrastplatte (2) bezogen auf das Pedal (1) elastisch schwenkbar ist, die Einrastplatte (2) ein von dort aus gegenüber dem ersten Klickende (11) verlaufendes zweites Klickende (21) aufweist, ein Einklickraum (4) zwischen dem ersten Klickende (11) und dem zweiten Klickende (21) zum Aufnehmen einer Platte eines Fahrradschuhs festgelegt ist;
ein plastisches Elastomer (3), das zwischen dem Pedal (1) und der Einrastplatte (2) angeordnet ist, wobei das Elastomer (3) ein Teil eines Drehgelenks zwischen dem Pedal (1) und der Einrastplatte (2) ist, ein Ende des Elastomers (3) an das Pedal (1) anstößt und das andere Ende an die Einrastplatte (2) anstößt und so für eine Elastizitätskraft gesorgt ist, die die Einrastplatte (2) elastisch in Richtung des Pedals (1) drückt, sodass die Einrastplatte (2) bezogen auf das Pedal (1) zum Einklicken der Platte des Fahrradschuhs elastisch geschwenkt wird, **dadurch gekennzeichnet, dass** die Einrastplatte (2) zwei von dort aus verlaufende und einander gegenüberliegende Ohrringe (22) aufweist, das Pedal (1) einen von dort aus verlaufenden Zapfenring (12) zur Platzierung zwischen den beiden Ohrringen (22) der Einrastplatte (2) aufweist, das Elastomer (3) im Wesentlichen eine Trapezform aufweist und so ein schmales Ende und ein breites Ende gegenüber dem schmalen Ende bildet, das Elastomer (3) eine seitlich darin festgelegte und dort hindurch verlaufende Durchgangsbohrung (31) aufweist, die Durchgangsbohrung (31) im schmalen Ende des Elastomers (3) befindlich ist, ein Drehstab (5) durch die beiden Ohrringe (22) der Einrastplatte (2), den Zapfenring (12) des Pedals (1) und die Durchgangsbohrung (31) in dem Elastomer (3) verläuft und so das Drehgelenk zwischen dem Pedal (1) und der Einrastplatte (2) bildet, der Zapfenring (12) eine darin festgelegte Aussparung (13) zum teilweisen Aufnehmen des Elastomers (3) aufweist, die Einrastplatte (2) eine von dort aus verlaufende und zwischen den beiden Ohrringen (22) befindliche anstoßende Blockiervorrichtung (23) zum Anstoßen an das Elastomer (3) aufweist.

2. Fahrradklickpedalanordnung nach Anspruch 1, wobei das Pedal (1) eine von dort aus verlaufende und in dem Einklickraum (4) befindliche Begrenzungskante (14) zum Anstoßen an die Einrastplatte (2) aufweist, damit verhindert wird, dass die Einrastplatte (2) über das Pedal (1) klappt.

3. Fahrradklickpedalanordnung nach Anspruch 1, wobei das Pedal (1) eine Achse (15) aufweist, die drehend dort hindurch verläuft, damit sie an die Verbindung mit einer Fahrradtretkurbel (6) angepasst ist.

## Revendications

1. Ensemble pédale de bicyclette sans attache, comprenant une pédale (1), la pédale (1) ayant une première extrémité sans attache (11) s'étendant à partir de celle-ci ;
une tôle de verrouillage (2) montée de manière pivotante sur la pédale (1), la tôle de verrouillage (2) étant apte à pivoter de manière élastique par rapport à la pédale (1), la tôle de verrouillage (2) ayant une seconde extrémité sans attache (21) s'étendant à partir de celle-ci, opposée à la première extrémité sans attache (11), un espace d'attache (4) étant défini entre la première extrémité sans attache (11) et la seconde extrémité sans attache (21) pour recevoir une cale d'une chaussure de cyclisme ;
un élastomère plastique (3) situé entre la pédale (1) et la tôle de verrouillage (2), l'élastomère (3) étant une partie d'un pivot entre la pédale (1) et la tôle de verrouillage (2), l'élastomère (3) ayant une extrémité venant en butée contre la pédale (1) et l'autre extrémité venant en butée contre la tôle de verrouillage (2) pour fournir une force élastique pour appuyer de manière élastique la tôle de verrouillage (2) vers la pédale (1), de telle sorte que la tôle de verrouillage (2) est amenée à pivoter de manière élastique par rapport à la pédale (1) pour attacher la cale de la chaussure de cyclisme, **caractérisé par le fait que** la tôle de verrouillage (2) a deux oreilles annulaires (22) s'étendant à partir de celle-ci et en regard l'une de l'autre, la pédale (1) ayant un tenon annulaire (12) s'étendant à partir de celle-ci pour un positionnement entre les deux oreilles annulaires (22) de la tôle de verrouillage (2), l'élastomère (3) a sensiblement une forme trapézoïdale pour former une extrémité étroite et une extrémité large opposée à l'extrémité étroite, l'élastomère (3) ayant un trou traversant (31) défini de manière latérale dans celui-ci et passant à travers celui-ci, le trou traversant (31) étant situé dans l'extrémité étroite de l'élastomère (3), un axe de pivot (5) passant à travers les deux oreilles annulaires (22) de la tôle de verrouillage (2), le tenon annulaire (12) de la pédale (1) et le trou traversant (31) dans l'élastomère (3) pour former le pivot entre la pédale (1) et la tôle de verrouillage (2), le tenon annulaire (12) ayant une rainure (13) définie dans celui-ci pour recevoir de manière partielle l'élastomère (3), la tôle de verrouillage (2) ayant un organe de blocage par butée (23) s'étendant à partir de celle-ci et situé entre les deux oreilles annulaires (22) pour venir en butée contre l'élastomère (3).

2. Ensemble pédale de bicyclette sans attache selon la revendication 1, dans lequel la pédale (1) a un ergot de restriction (14) s'étendant à partir de celle-ci et situé dans l'espace d'attache (4) pour venir en butée contre la tôle de verrouillage (2) pour empêcher la tôle de verrouillage (2) de se replier sur la pédale (1).

3. Ensemble pédale de bicyclette sans attache selon la revendication 1, dans lequel la pédale (1) a un axe de pédalier (15) passant à travers celle-ci de manière pivotante pour une adaptation pour liaison avec une manivelle de bicyclette (6).
